# EUROPÄISCHE PATENTSCHRIFT

(11) **EP 1 561 971 B1**
(45) Veröffentlichungstag und Bekanntmachung des Hinweises auf die Patenterteilung: **12.06.2013**
(21) Anmeldenummer: 04028486.1
(22) Anmeldetag: 01.12.2004
(51) Int. Cl.: F16H 31/00, A01K 5/00

(54) **Antriebsvorrichtung**
Drive device
Dispositif d'entraînement

(30) Priorität: 06.02.2004 DE 202004001818 U
(43) Veröffentlichungstag der Anmeldung: 10.08.2005
(73) Patentinhaber: Trioliet Mullos B.V., 7570 AC Odenzaal (NL)
(72) Erfinder: Van der Plas, Nicolaas, 7576 WX Oldenzaal (NL)
(74) Vertreter: Grünecker, Kinkeldey, Stockmair & Schwanhäusser

(56) Entgegenhaltungen:
- DE-U1- 20 115 929
- DE-U1- 20 119 534
- GB-A- 921 869
- US-A- 5 720 203

## Beschreibung

Die Erfindung bezieht sich auf eine Verwendung einer Antriebsvorrichtung für ein Mischwerkzeug eines Futtermischers.

Ein Futtermischer ist aus dem DE 201 19 534 U1 bekannt. und enthält eine Antriebsvorrichtung die zum Antreiben einer Mischschnecke eines Futtermischers durch die Zapfwelle eines Schleppers dient. Zwischen Zapfwelle und Mischschnecke ist ein Getriebe und eine Kupplungseinrichtung angeordnet, über die die Mischschnecke mit unterschiedlichen Drehzahlen angetrieben werden kann, wobei das Schalten im laufenden Betrieb erfolgen kann. Bei Mischschnecken in Futtermischern und auch bei anderen vergleichbaren Einrichtungen besteht das Problem, dass je nach Mischaufgabe unterschiedlich hohe Leistungsanforderungen an die Antriebsvorrichtung gestellt werden, wobei erhöhte Leistungsanforderungen überwiegend bei Beginn der Arbeit auftreten. Diese erhöhten Leistungsanforderungen resultieren bei Futtermischern beispielsweise aus der zäheren oder härteren Konsistenz des Futters bei Beginn des Mischvorganges oder aus der Tatsache, dass bei besonders großen Mischern (mehr als 30 m³) das Futter zunächst in Bewegung zu bringen ist. Um diesen erhöhten Belastungen Rechnung zu tragen, wird bei der bekannten Antriebsvorrichtung eine Möglichkeit zum automatischen Zurückschalten auf eine niedrigere Drehzahl vorgesehen, wenn das Drehmoment unzulässig ansteigt, wobei automatisch wieder auf die höhere Drehzahl geschaltet wird, wenn sich die Belastung normalisiert. Zu diesem Zweck enthält die bekannte Antriebsvorrichtung eine Messvorrichtung zum Messen des Antriebsdrehmoments für die Mischarbeit der Mischschnecke und eine Steuerung, die das Getriebe entsprechend schaltet. Damit ist jedoch nicht unbedingt das Problem gelöst, da die erhöhten Drehmomente ja erst auftreten müssen, bevor die Steuerung reagiert und zurückschalten kann. Dies kann insbesondere beim Anlaufen Probleme verursachen.

Die Verwendung von Freilaufkupplungen ist bei Getrieben üblich und beispielsweise aus der US-A-5 720 203 ersichtlich. Diese Druckschrift beschreibt ein Fahrgetriebe für ein Automobil, das eine Eingangswelle aufweist, die über eine Doppelkupplung mit zwei Ausgangswellen verbunden ist. Die Freilaufkupplung sitzt auf der zweiten Ausgangswelle und soll eine Schaltblockade verhindern, die sich ansonsten zwangsläufig bei der beschriebenen kompakten Konstruktion des Getriebes ergeben würde.

Als nächshiegerden Stand der Technik zeigt die GB 921 869 ein Getriebe mit sehr breit gefächerten Anforderungen, hohes Drehmoment zum Anfahren und hohe Geschwindigkeit, das aus einer Art Baukasten mit einer Vielzahl von Getriebekästenpaarungen zusammengesetzt werden muss, wobei jeder Getriebekasten die Drehrichtung umkehrt. Eine solche Lösung ist wegen ihres ungewöhnlichen Anforderungsprofils nur für Lokomotiven brauchbar; für Futtermischer dagegen extrem überdimensioniert, wobei auf jedem Fall zwei Getriebekästen vorgesehen sein müssten, um die Drehrichtung beizubehalten, was insbesondere bei den Mischschnecken üblicher Futtermischer unbedingt notwendig ist.

Der Erfindung liegt somit die Aufgabe zugrunde, das Anlaufverhalten einer Antriebsvorrichtung für ein Mischwerkzeug eines Futtermischers zu verbessem.

Die Aufgabe wird durch die im Anspruch 1 angegebenen Merkmale gelöst.

Durch die erfindungsgemäß Verwendung der vorgesehene Anlaufstufe wird sichergestellt, dass ein Misch- oder ein anderes Werkzeug oder Gerät immer mit einer Drehzahl anläuft, die in der Lage ist, auch eine hohe Leistung zu erbringen. Auf diese Weise wird sichergestellt, dass die angetriebene Struktur zunächst in Bewegung kommt, bevor auf eine höhere Drehzahl geschaltet wird. Durch die Anlaufstufe ist es weiterhin möglich, problemlos im laufenden Betrieb auf die nächst höhere Drehzahl zu schalten, da die Schalteinrichtung nur ein relativ kleines Drehmoment schalten muss, da sich das Getriebe schon dreht und nicht vom Stillstand aus das größere Drehmoment erzeugt werden muss. Bei Verwendung eines Motors zum Schalten ist nur ein kleiner Regelbereich erforderlich. Die Verwendung einer Freilaufkupplung stellt die konstruktiv und im Hinblick auf die Funktion einfachste und beste Möglichkeit dar, die Anlaufstufe zu beenden, wenn auf eine höhere Drehzahl geschaltet wird.

Vorteilhafte Weiterbildungen der Erfindung sind den Unteransprüchen zu entnehmen.

Durch die Ausgestaltung nach Anspruch 2 wird die Freilaufkupplung durch die Drehung der Ausgangswelle gelöst, so dass keine zusätzlichen Vorkehrungen zum Lösen der Freilaufkupplung am Ende des Anlaufbetriebes vorgesehen werden müssen.

Die Ansprüche 3 und 4 beschreiben besonders bevorzugte konstruktive Ausgestaltungen für die Freilaufkupplung und die Schalteinrichtung.

Anspruch 5 ist besonders dort vorteilhaft, wo der Antrieb beispielsweise über die Zapfwelle eines Schleppers erfolgt.

Von besonderem Vorteil ist die in Anspruch 6 beschriebene Schalt-Begrenzungseinrichtung, durch die verhindert wird, dass zu schnell auf die höhere Drehzahl geschaltet wird.

Die konstruktive Ausgestaltung nach Anspruch 7 ist besonders bevorzugt, da damit eine schlepperunabhängige Schaltbegrenzung verwirklicht werden kann.

Anspruch 8 beschreibt eine besonders bevorzugte konstruktive Ausgestaltung der Anlaufstufe.

Die Erfindung ist für die unterschiedlichsten Getriebearten einsetzbar. Im einfachsten Fall besteht das Getriebe gemäß Anspruch 9 lediglich aus einer Getriebestufe mit höherer Drehzahl zusätzlich zur Anlaufstufe.

Es können jedoch auch mehrere Getriebestufen gemäß Anspruch 10 vorgesehen werden, wobei beide Getriebestufen die Freilaufkupplung lösen.

Vorteilhafte konstruktive Ausgestaltungen der Verwendung dieser Antriebsvorrictung sind in den Ansprüchen 11 und 12 beschrieben.

Die erfindungsgemäß Verwendete Antriebsvorrichtung kann auch als stufenlos schaltbares Getriebe mit einer zusätzlichen Anlaufstufe gemäß Anspruch 13 ausgebildet sein.

Für den stufenlos schaltbaren Getriebebereich wird bevorzugt ein Kettenwandler gemäß Anspruch 14 eingesetzt, der über eine Freilaufkupplung gemäß Anspruch 15 in der Anlaufstufe vom Antrieb getrennt werden kann.

Für einen stufenlos schaltbaren Getriebebereich kann jedoch auch das in den Ansprüchen 16 bis 19 beschriebene Differentialgetriebe eingesetzt werden.

Eine besonders bevorzugte Schalteinrichtung für den Getriebebereich beschreibt Anspruch 20.

Anspruch 21 beschreibt eine besonders bevorzugte Verwendungsmöglichkeit der Antriebsvorrichtung als Reduziergetriebe, das einer gemeinsamen Antriebswelle einer Mehrzahl von Mischschnecken vorgeschaltet wird. Dadurch konnen die Winkelgetriebe zum Antreiben der einzelnen Mischschnecken konstruktiv einfach ausgebildet werden. Durch die Anlaufstufe ist die Antriebsvorrichtung ohne weiteres in der Lage, auch die Mehrzahl von Mischschnecken großer Futtermischer in Bewegung zu setzen, auch gegen einen hohen Widerstand des eingefüllten Futters.

Ausführungsbeispiele der Erfindung werden nachfolgend anhand der Zeichnungen näher erläutert. Es zeigen:
- Fig. 1: einen erfindungsgemäß ausgerüsteten Futtermischer in schematischer Darstellung in Seitenansicht,
- Fig. 2: eine geschnittene, schematische Darstellung eines ersten Ausführungsbeispiels einer Antriebsvorrictung des Futtermischers,
- Fig. 3: eine geschnittene, schematische Darstellung eines zweiten Ausführungsbeispiels einer Antriebsvorrichtung,
- Fig. 4: eine geschnittene, schematische Darstellung eines dritten Ausführungsbeispiels der Antriebsvorrichtung,
- Fig. 5: eine geschnittene, schematische Darstellung eines vierten Ausführungsbeispiels einer Antriebsvorrichtung, und
- Fig. 6: eine geschnittene, schematische Darstellung eines fünften Ausführungsbeispiels einer Antriebsvorrichtung.

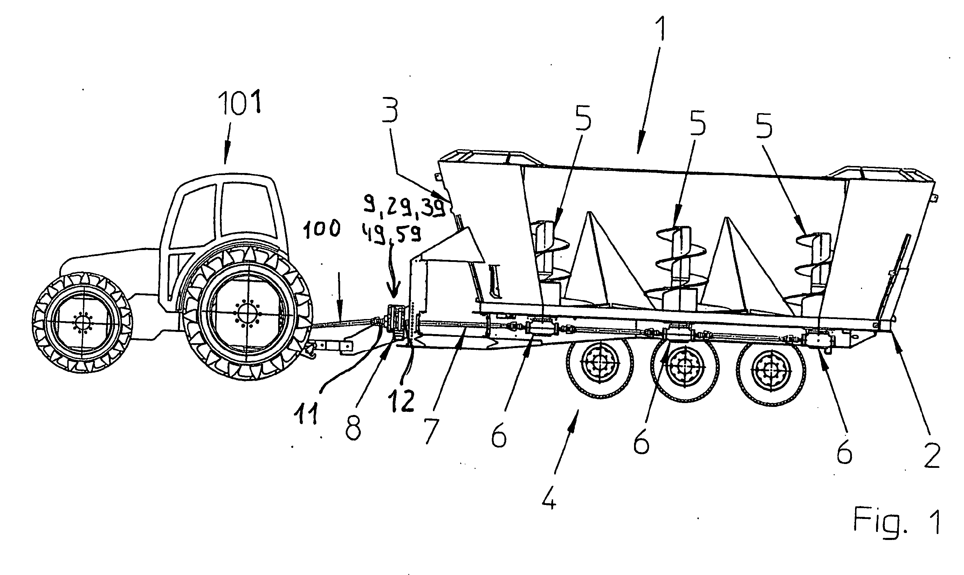

Figur 1 zeigt in schematischer Darstellung einen Futtermischer 1, der im dargestellten Ausführungsbeispiel als Mischwagen ausgebildet ist. Der Futtermischer 1 enthält einen Rahmen 2 mit einem Behälter 3, der über ein Fahrwerk 4 verfahrbar ist. Im Inneren des Behälters 3 sind im dargestellten Ausführungsbeispiel drei Mischwerkzeuge 5 vorgesehen, die im dargestellten Ausführungsbeispiel als vertikale Mischschnecken ausgebildet sind. Jede der Mischschnecken 5 wird über jeweils ein Winkelgetriebe 6 von einer gemeinsamen Antriebswelle 7 angetrieben. Die Antriebswelle 7 wird über eine Antriebsvorrichtung in Form eines Reduziergetriebes 8 von einer Zapfwelle 100 eines Schleppers 101 angetrieben. Das Reduziergetriebe 8 enthält eine Vielzahl von Getriebegliedern, die eine Untersetzung der Drehzahl der Zapfwelle 100 bewirken, so dass die Antriebswelle 7 und somit die Mischwerkzeuge 5 mit unterschiedlichen Drehzahlen angetrieben werden können.

Die bislang beschriebenen Einzelheiten entsprechen der konstruktiven Ausgestaltung herkömmlicher Futtermischer und müssen demzufolge nicht nochmals im Einzelnen erläutert werden.

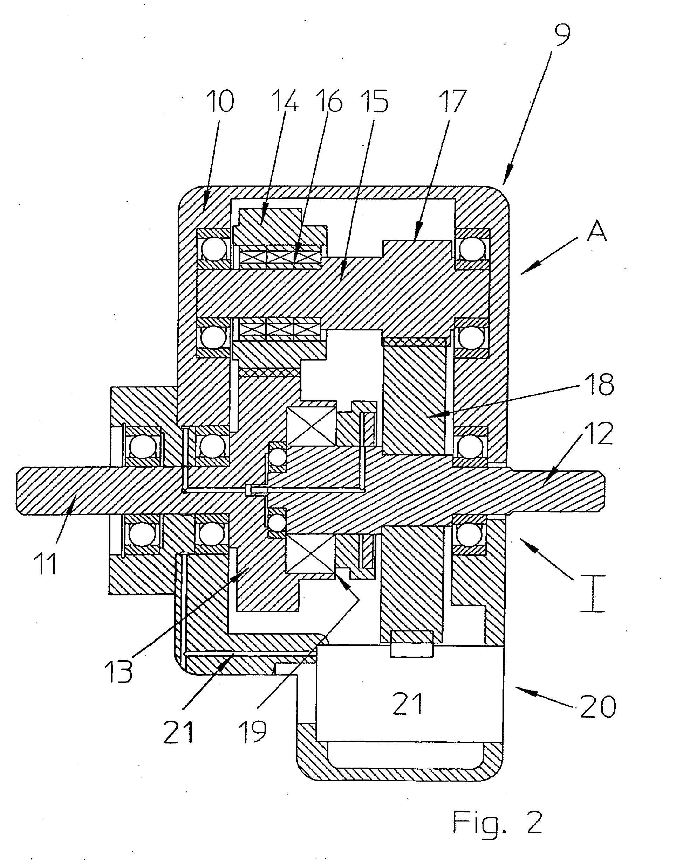

Als Reduziergetriebe 8 kann eines der in den Figuren 2 bis 6 dargestellten Antriebsvorrichtungen eingesetzt werden.

Figur 2 zeigt ein erstes Ausführungsbeispiel einer erfindungsgemäß verwendeten Antriebsvorrichtung 9, in Form eines reinen Stirnradgetriebes. Die Antriebsvorrichtung 9 weist ein Gehäuse 10 auf, in dem eine Eingangswelle 11 und eine Ausgangswelle 12 gelagert sind, wobei im dargestellten Ausführungsbeispiel die Eingangswelle 11 koaxial mit der Ausgangswelle 12 angeordnet ist. Beim Einsatz als Reduziergetriebe 8 in Figur 1 ist die Eingangswelle 11 mit der Zapfwelle 100 und die Ausgangswelle 12 mit der Antriebswelle 7 verbunden.

Die Antriebsvorrichtung 9 ist ein schaltbares Stufengetriebe mit Getriebegliedern in Form von Zahnrädern und enthält eine erste Getriebestufe A, die als Anlaufstufe für einen Anlaufbetrieb ausgebildet ist und für eine Untersetzung der höheren Drehzahl der Eingangswelle 11 auf eine niedrigere Drehzahl an der Ausgangswelle 12 sorgt. Die Antriebsvorrichtung 9 enthält weiterhin eine Getriebestufe I, die eine höhere Drehzahl an der Ausgangswelle 12 liefert, wie sie beispielsweise zum Mischen und Austragen von Futter zweckmäßig und üblich ist. Im dargestellten Ausführungsbeispiel gestattet die Getriebestufe I einen Direktantrieb der Ausgangswelle 12 mit der Drehzahl der Eingangswelle 11.

Die Antriebsvorrichtung 9 enthält ein erstes Zahnrad 13, das als Stirnzahnrad ausgebildet ist und fest auf der Eingangswelle 11 sitzt. Das erste Zahnrad 13 kämmt mit einem zweiten Zahnrad 14, das einen gegenüber dem ersten Zahnrad 13 verringerten Durchmesser aufweist, auf einer im Gehäuse 10 gelagerten Umgehungswelle 15 sitzt und mit einer Freilaufkupplung 16 versehen ist. Die Freilaufkupplung 16 gestattet eine Antriebsübertragung vom ersten Zahnrad 13 über das zweite Zahnrad 14 auf die Umgehungswelle 15 und ist bevorzugt als Klemmkörper-Freilaufkupplung ausgebildet.

Die Umgehungswelle 15 enthält ein drittes Zahnrad 17, das drehfest auf der Welle 15 sitzt und dessen Durchmesser bevorzugt kleiner als der des zweiten Zahnrades 14 ist. Das dritte Zahnrad 17 kämmt mit einem vierten Zahnrad 18, das fest auf der Ausgangswelle 12 sitzt. Das Zahnrad 18 hat einen Durchmesser, der bevorzugt größer als der des dritten Zahnrades 17 und der des ersten Zahnrades 13 ist. Allerdings könnte das dritte Zahnrad 17 so groß wie das zweite Zahnrad 14 sein und das vierte Zahnrad 18 so groß wie das erste Zahnrad 13.

Zwischen der Ausgangswelle 12 und der Eingangswelle 11 ist eine Kupplung 19 vorgesehen, die bevorzugt hydraulisch betätigt wird und im geschalteten Zustand die Ausgangswelle 12 direkt an die Eingangswelle 11 ankuppelt, während im gelösten Zustand der Kupplung 19 sich Eingangswelle 11 und Ausgangswelle 12 unabhängig voneinander drehen können. Die Kupplung ist bevorzugt eine hydraulische Lamellenkupplung mit sehr kleinem Volumen von beispielsweise 20 cm³, die mit etwa ab 20 bar kuppelt, kann jedoch auch jede andere synchronisierte, mechanische, oder elektrische Kupplung sein.

Im Gehäuse 10 ist weiterhin eine Schalt-Begrenzungseinrichtung 20 angeordnet, die in den Hydraulikkreislauf zum Betätigen der Kupplung 19 einwirkt. Die Schalt-Begrenzungseinrichtung 20 dient zum Schalten auf die erste Getriebestufe I unabhängig vom Hydraulikkreislauf des Schleppers 101 und nur über die Anlaufstufe A. Die Steuerung der Kupplung könnte jedoch auch über den Schlepper 101 (Isobus-System) erfolgen.

Die Schalt-Begrenzungseinrichtung 20 enthält eine Zahnradpumpe 21, die in der Anlaufstufe A, insbesondere über das vierte Zahnrad 18 angetrieben wird und durch diesen Antrieb einen Hydraulikmitteldruck aufbaut. Die Schalt-Begrenzungseinrichtung enthält weiterhin ein nicht dargestelltes Proportionalventil, das den Druck festlegt, auf den die Zahnradpumpe 21 das Hydraulikmittel bringen muss, damit die Kupplung 19 vom Fahrer oder automatisch geschaltet werden kann.

Die Antriebsvorrichtung 9 arbeitet wie folgt. Wird der Antrieb über die Zapfwelle 100 angeschaltet, so dreht sich zunächst die Eingangswelle 11 mit dem ersten Zahnrad 13, während das Proportionalventil ein Einrücken der hydraulischen Kupplung 19 sperrt (Pumpe ohne Druck). Es kann somit nicht geschaltet werden. Der Antrieb läuft somit über die Anlaufstufe A, d.h. über das erste Zahnrad 13 wird das zweite Zahnrad 14, durch das Zahnrad 14 und die Freilaufkupplung 16 die Umgehungswelle 15 und das dritte Zahnrad 17, und durch das dritte Zahnrad 17 das vierte Zahnrad 18 und die Ausgangswelle 12 angetrieben. Die Ausgangswelle 12 treibt dann über die Winkelgetriebe 6 die Mischwerkzeuge 5 mit einer geringen Drehzahl und demzufolge einem hohen Drehmoment an.

Gleichzeitig wird jedoch auch durch das vierte Zahnrad 18 die Zahnradpumpe 21 der Schalt-Begrenzungseinrichtung 20 angetrieben, wodurch sich der Druck des Hydraulikmittels erhöht und ein Schalten der Hydraulikkupplung 19 freigegeben ist.

Ist die Kupplung 19 durch den Fahrer oder automatisch geschaltet, so wird in der Getriebestufe I das vierte Zahnrad 18 direkt von der Eingangswelle 11 angetrieben, diesmal mit einer höheren Geschwindigkeit als über die Anlaufstufe A. Das vierte Zahnrad 18 treibt nunmehr in umgekehrter Übertragungsrichtung, d.h. in einer Richtung zurück auf die Eingangswelle 11, das dritte Zahnrad 17 und somit die Umgehungswelle 15 an, die nunmehr schneller läuft als das zweite Zahnrad 14, das nach wie vor vom ersten Zahnrad 13 angetrieben wird. Dadurch wird die Freilaufkupplung 16 gelöst und trennt den Antriebszug über die Anlaufstufe A.

Steht die Eingangswelle 11 still, wird auch die Zahnradpumpe 21 nicht mehr angetrieben und der Druck fällt auf Null, so dass beim neuerlichen Anfahren der Antrieb wiederum zunächst über die Anlaufstufe A läuft.

Die Antriebsvorrichtung 9 eignet sich besonders für Mischeinrichtungen bis etwa 25m³ also mittlere bis große Mischwagen. In der Anlaufstufe A und beim Mischen wird mit einer Übersetzung ins Langsame von etwa 1,7: 1, beim Ausdosieren mit 1 : 1 gearbeitet.

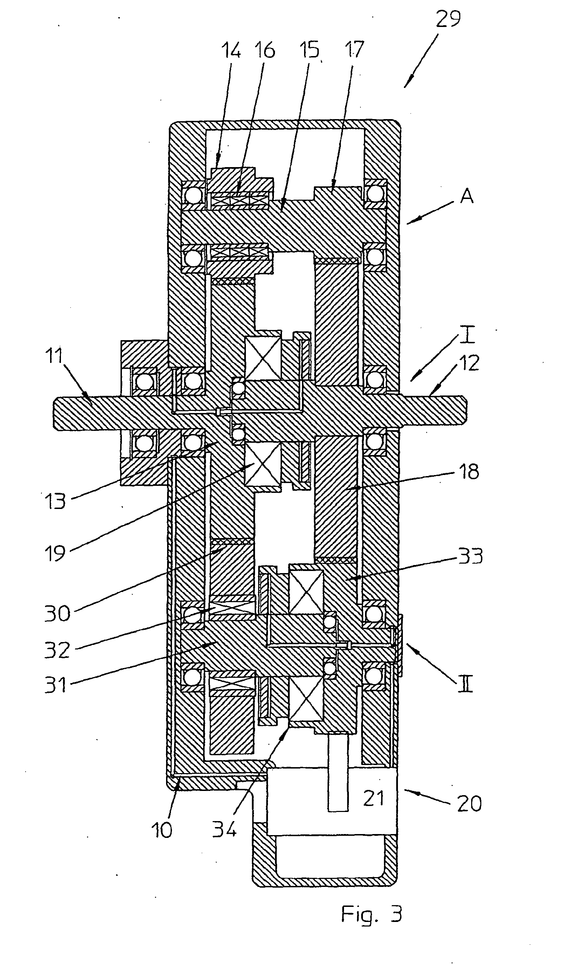

Die Antriebsvorrichtung 9 gemäß Figur 2 kann durch eine oder mehrere weitere Getriebestufen erweitert werden, wobei Figur 3 ein Ausführungsbeispiel einer Antriebsvorrichtung 29 zeigt, bei dem die Anlaufstufe A und die Getriebestufe I des Ausführungsbeispiels gemäß Figur 2 und zusätzlich eine weitere Getriebestufe II vorgesehen ist. Die konstruktive Ausgestaltung der Anlaufstufe A und der Getriebestufe I entsprechen dem Ausführungsbeispiel gemäß Figur 2 sind mit den gleichen Bezugszeichen versehen und werden nicht nochmals erläutert. In der Anlaufstufe A ist jedoch eine Untersetzung im Bereich von etwa 3,5 - 4,0 : 1 und in der Getriebestufe I wiederum 1 : 1 verwirklicht. Die Getriebestufe II ist ebenfalls eine Getriebestufe mit höherer Drehzahl (Übersetzungsverhältnis etwa 1,7 : 1), liegt jedoch in der Drehzahl zwischen der Anlaufstufe A und der Getriebestufe I; liefert somit eine Drehzahl an der Ausgangswelle 12, die höher ist als in der Anlaufstufe A jedoch niedriger als in der Getriebestufe I, so dass zwischen einer niedrigeren Drehzahl in der Getriebestufe II, wie sie beispielsweise zum Mischen eingesetzt werden kann, und einer höheren Drehzahl in der Getriebestufe I, wie sie beispielsweise zum Ausolosieren des Futters aus dem Behälter 3 verwendet werden kann, gewählt werden kann. Dabei liegen, bei 1000 U/min Eingangsdrehzahl, die Drehzahlen beim Anlaufen bei 250 - 300 U/min, beim Mischen bei 500 - 650 U/min und beim Ausdosieren bei bis zu 1000 U/min.

Die Getriebestufe II ist ebenfalls als Stirnradgetriebe ausgebildet und enthält ein fünftes Zahnrad 30, das auf einer zweiten Umgehungswelle 31 sitzt, die im Gehäuse 10 gelagert ist und mit dem ersten Zahnrad 13 kämmt. Bevorzugt ist zwischen dem fünften Zahnrad 30 und der zweiten Umgehungswelle 31 eine zweite Freilaufkupplung 32 vorgesehen, die jedoch, wie nachfolgend beschrieben nicht ungedingt notwendig ist.

Das vierte Zahnrad 18 kämmt mit einem sechsten Zahnrad 33, das ebenfalls drehbar im Gehäuse 10 gelagert ist. Das sechste Zahnrad 33 ist koaxial zur Achse der zweiten Umgehungswelle 31 gelagert und mit Hilfe einer zweiten Kupplung 34, vorzugsweise einer hydraulischen Kupplung, mit der zweiten Umgehungswelle 31 bewegungsübertragend zu verbinden.

Das fünfte Zahnrad 30 ist bevorzugt relativ klein gegenüber dem ersten Zahnrad 13 und kleiner als das sechste Zahnrad 33, während das sechste Zahnrad 33 klein gegenüber dem vierten Zahnrad 18 und das vierte Zahnrad 18 größer als das erste Zahnrad 13 ist. Dadurch muss von der Kupplung ein möglichst geringes Drehmoment geschaltet werden.

Auch die Antriebsvorrichtung 29 enthält die Schalt-Begrenzungseinrichtung 20 mit der Zahnradpumpe 21, die hier jedoch aus konstruktiven Gründen über das sechste Zahnrad 33 angetrieben wird. Die Schalt-Begrenzungseinrichtung 20 wirkt in diesem Ausführungsbeispiel auf die zweite Kupplung 34 und verhindert das Einrücken der zweiten Kupplung 34 solange, solange über die Anlaufstufe A noch nicht der erforderliche Druck aufgebaut wurde.

Wurde der erforderliche Druck durch die Zahnradpumpe 21 aufgebracht, so kann die Kupplung 34 geschaltet werden. Ist die zweite Kupplung 34 geschaltet, so wird über das erste Zahnrad 13 das fünfte Zahnrad 30 und bei verbundener Freilaufkupplung 32 über die Umgehungswelle 31 das sechste Zahnrad 33 und von diesem das vierte Zahnrad 18 und somit die Ausgangswelle 12 angetrieben. Über das vierte Zahnrad 18 wird jedoch auch das dritte Zahnrad 17 und die Umgehungswelle 15 der Anlaufstufe A gedreht, so dass die Freilaufkupplung 16 gelöst wird.

Soll die Drehzahl weiter erhöht werden, so wird die erste Kupplung 19 geschaltet. Ist eine zweite Freilaufkupplung 32 vorhanden, so kann die hydraulische zweite Kupplung 34 der Getriebestufe II geschaltet bleiben. Dann erfolgt der Antrieb der Ausgangswelle 12 direkt durch die Eingangswelle 11, während durch das erste Zahnrad 13 das fünfte Zahnrad 30 und durch das vierte Zahnrad 18 das sechste Zahnrad 33 angetrieben wird, was entweder, bei geschalteter hydraulischer Kupplung 34 zum Lösen der zweiten Freilaufkupplung 32 führt, so dass dadurch die beschriebene Antriebsbewegung möglich ist, oder aber die zweite hydraulische Kupplung 34 wird gelöst, was die zweite Freilaufkupplung 32 überflüssig macht. Auch in der Getriebestufe I und II wird somit die Zahnradpumpe 21 angetrieben und hält den Druck aufrecht.

Wird der Antrieb jedoch stillgesetzt, so fällt der durch die Zahnradpumpe 21 erzeugte Druck ab, und beim nächsten Anfahren steht wiederum die Anlaufstufe A zur Verfügung.

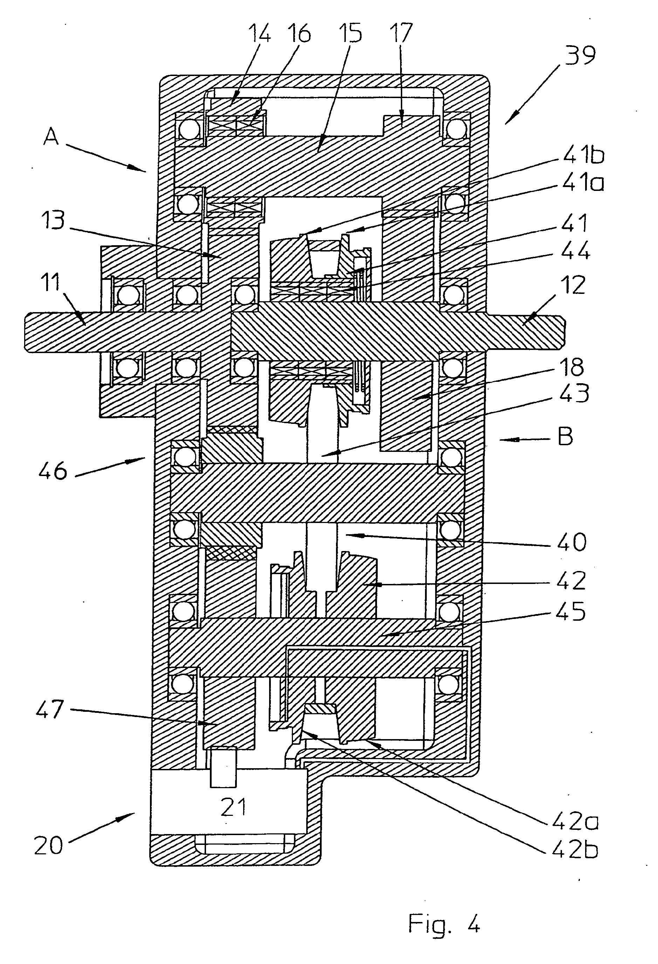

Figur 4 zeigt ein drittes Ausführungsbeispiel einer Antriebsvorrichtung 39, die wiederum mit der Anlaufstufe A der Figuren 2 und 3 versehen ist, die wie beschrieben funktioniert, so dass sie nicht nochmals erläutert werden muss.

Die Antriebsvorrichtung 39 ist weiterhin mit Getriebegliedern einer stufenlosen Schaltung über einen Getriebebereich B versehen. Der Getriebebereich B wird durch einen handelsüblichen Kettenwandler 40, mit einem ersten Kettenrad 41, einem zweiten Kettenrad 42 und einer beide verbindenden Kette 43 abgedeckt. Das erste Kettenrad 41 enthält schaltbare Naben 41 a, 41 b und sitzt über einer Freilaufkupplung 44 auf der Ausgangswelle 12, wobei die Freilaufkupplung 44 bevorzugt als Klemmkörper-Freilaufkupplung ausgebildet ist.

Das zweite Rad 42 enthält federbelastete, schaltbare Naben 42a, 42b und sitzt bewegungstragend auf einer weiteren Umgehungswelle 45, die über ein Stirnradgetriebe 46 vom ersten Zahnrad 13 angetrieben wird, wobei das Stirnradgetriebe 46 dafür sorgt, dass sich die Räder 41, 42 gleichsinnig drehen. Das Stirnradgetriebe 46 enthält weiterhin ein Zahnrad 47, das auf der Umgehungswelle 45 sitzt und eine Zahnradpumpe 21 einer Schalt-Begrenzungseinrichtung 20 in der oben beschriebenen Weise antreibt. Das Proportionalventil der Schalt-Begrenzungseinrichtung 20 der Antriebsvorrichtung 39 gestattet das Einschalten des Kettenwandlers 40.

Nach dem Anschalten des Antriebes wird auch die Antriebsvorrichtung 39 über die Eingangswelle 11 zunächst in der Anlaufstufe A im Anlaufbetrieb betrieben, bis der von der Schalt-Begrenzungseinrichtung 20 gelieferte Druck ausreicht, um den Kettenwandler 40 automatisch oder vom Fahrer zuzuschalten, z.B. über die Hydraulikanlage des Schleppers 101 oder ein Stromaggregat. In der Anlaufstufe A wird die Ausgangswelle 12 mit einer Drehzahl angetrieben, bei der die Freilaufkupplung 44 nicht gekuppelt ist. Die Ausgangswelle 12 treibt in der Anlaufstufe A somit das Rad 41 des Kettenwandlers 40 nicht an.

Dagegen wird in der Anlaufstufe A über das Stirnradgetriebe 46 und das Zahnrad 47 die Zahnradpumpe 21 angetrieben und baut den notwendigen Druck zum Zuschalten des Kettenwandlers 40 auf. Ist der Kettenwandler 40 über die Freilaufkupplung 44 mit der Ausgangswelle 12 gekuppelt, so kann die Drehzahl durch Relativbewegungen der Naben 41 a, 41 b bzw. 42a, 42b im gesamten Getriebebereich B stufenlos und mit etwa den Übersetzungsverhältnissen und Drehzahlen, wie bei der Antriebsvorrichtung gemäß Fig. 2 bzw. 3 verändert werden.

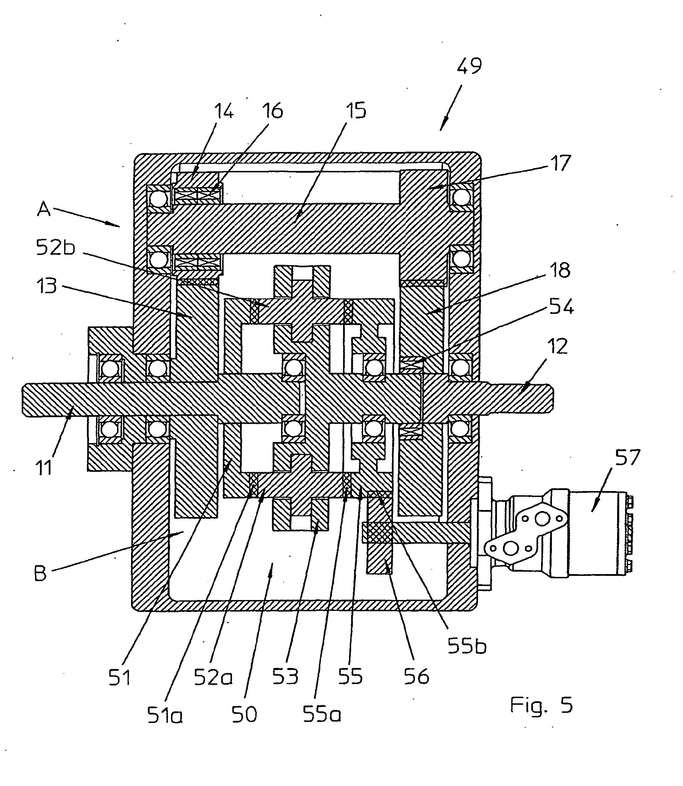

Fig. 5 zeigt einer viertes Ausführungsbeispiel einer Antriebsvorrichtung 49, die bis auf die nachfolgend beschriebenen Einzelheiten den ersten bis dritten Ausführungsformen entspricht, so dass gleiche bzw. vergleichbare Bauteile mit den gleichen Bezugszeichen gekennzeichnet und nicht nochmals erläutert sind. Auch das vierte Ausführungsbeispiel der Antriebsvorrichtung 49 enthält eine Anlaufstufe A mit einem Antrieb über die Eingangswelle 11, das erste Zahnrad 13, das zweite Zahnrad 14, die Freilaufkupplung 16, die Umgehungswelle 15, das dritte Zahnrad 17 und über das vierte Zahnrad 18 auf die Ausgangswelle 12.

Weiterhin enthält die Antriebsvorrichtung 49 einen stufenlos schaltbaren Getriebebereich B, der in diesem Ausführungsbeispiel ein Differentialgetriebe 50 enthält. Das Differentialgetriebe 50 enthält ein Sonnenrad 51, das fest auf der Eingangswelle 11 sitzt. Das Sonnenrad 51 ist mit einem radialen Zahnkranz 51a versehen und kämmt mit zwei Planetenrädern 52a, 52b, die identisch ausgebildet sind und um senkrecht zur Antriebswelle 11 verlaufende Drehachsen in einer Umfangsfläche eines radförmigen Trägers 53 gelagert sind. Der Träger 53 steht über eine zweite Freilaufkupplung 54 mit dem vierten Zahnrad 18 und somit mit der Ausgangswelle 12 in Verbindung. Auch hier kann die Freilaufkupplung 54 bevorzugt eine Klemmkörper-Freilaufkupplung sein.

Die Planetenräder 52a, 52b kämmen weiterhin mit einem Zahnkranz 55a eines Stellrades 55, wobei der Zahnkranz 55a dem Zahnkranz 51a des Sonnenrades 51 entspricht. Am Stellrad 55 ist eine weitere Verzahnung 55b vorgesehen, mit der ein Ritzel 56 kämmt, das über einen Motor 57, bevorzugt einen hydraulischen Motor, angetrieben wird. Durch den Motor 57 kann über das Ritzel 56 das Stellrad 55 blockiert oder freigegeben sowie aktiv gleichsinnig oder gegensinnig zum Sonnenrad 51 mit unterschiedlichen Geschwindigkeiten angetrieben werden.

Die Anlaufstufe A des vierten Ausführungsbeispiels der Antriebseinrichtung 49 wirkt wie oben beschrieben, d.h. der Antrieb erfolgt unter Umgehung des Planetengetriebes 50 über das erste Zahnrad 13, das zweite Zahnrad 14, die Freilaufkupplung 16, die Umgehungswelle 15, das dritte Zahnrad 17 und über das vierte Zahnrad 18 auf die Ausgangswelle 12.

Beim Antrieb über die Antriebsstufe A wird über den Motor 57 das Stellrad 55 gleichsinnig und mit etwa der gleichen Drehzahl wie das Sonnenrad 51, das durch die Eingangswelle 11 1 : 1 angetrieben wird, so dass der Träger 53 stillsteht oder sich nur mit einer Drehzahl dreht, die unter der Drehzahl des vierten Zahnrades 18 beim Betrieb in der Anlaufstufe A liegt, wodurch die Freilaufkupplung 54 gelöst ist.

Soll jetzt in den Getriebebereich B geschaltet werden, so wird durch den Fahrer oder automatisch über die Hydraulikanlage des Schleppers 101 oder ein Stromaggregat die Drehzahl des Stellrades 55 unter die Drehzahl der Eingangswelle 11 bis auf Null verringert und das Ritzel 56 blockiert. Dabei wird die Drehung des Trägers 53 erhöht, bis die Freilaufkupplung 54 greift und die Freilaufkupplung 16 gelöst wird. Ist das Stellrad 55 blockiert, so treibt das Differentialgetriebe 50 die Ausgangswelle 12 mit einem Übersetzungsverhältnis an, das aus den Größenverhältnissen zwischen dem Sonnenrad 51 und den Planetenrädern 52a, 52b resultiert. Bevorzugt ist das Größenverhältnis zwischen dem Sonnenrad 51 und den Planetenrädern 52a, 52b so eingestellt, dass die Ausgangswelle 12 bei blockiertem Stellrad 55 mit der gewünschten Drehzahl für das Mischen angetrieben wird.

Zum Ausdosieren, bei dem eine höhere Drehzahl erwünscht ist, wird das Stellrad 55 über das Ritzel 56 durch den Motor 57 gegensinnig zum Sonnenrad 51 angetrieben, wodurch sich die Drehzahl der Ausgangswelle 12 bis auf die gewünschte Ausdosier-Drehzahl erhöht.

Die Werte für die Übersetzungen und Drehzahlen entsprechen den bereits anhand der vorangegangenen Ausführungsbeispiele beschriebenen Werten.

Die Übersetzungsverhältnisse der Zahnräder können so gewählt werden, dass der Verstellbereich des Motors 57 relativ gering ist, große Geschwindigkeiten des Ritzels 56 und große auf das Differentialgetriebe 50 einwirkende Drehmomente vermieden werden.

Weiterhin könnte bei der Antriebsvorrichtung 49 eine Pumpe vorgesehen werden, die analog der Zahnradpumpe 21 der vorangegangenen Ausführungsbeispiele ein Schalten des Getriebes unabhängig vom Hydraulikkreislauf des Schleppers 101 gestattet. Diese Pumpe könnte beispielsweise die Steuerung des Motors 57 übernehmen.

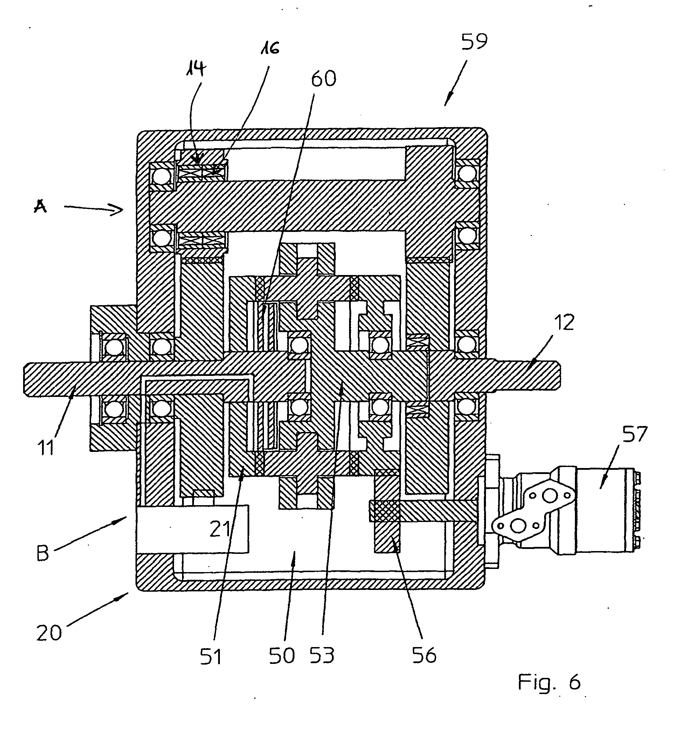

Um den erforderlichen Regelbereich des Motors 57 noch weiter zu verkleinern, ist in Fig. 6 ein fünftes Ausführungsbeispiel einer Antriebsvorrichtung 59 dargestellt. Die Antriebsvorrichtung 59 unterscheidet sich von der Antriebsvorrichtung 49 in Figur 5 lediglich durch eine Kupplung 60, insbesondere eine Lamellenkupplung, die die Eingangswelle 11 direkt, d.h. 1:1, über den Träger 53 mit der Ausgangswelle 12 koppelt. Dabei läuft das Ritzel 56 frei.

Bei der Antriebsvorrichtung 59 ist die Schalt-Begrenzungseinrichtung 20 der ersten bis dritten Ausführungsbeispiele vorgesehen, die wiederum eine Zahnradpumpe 21 und ein nicht dargestelltes Proportionalventil enthält, mit denen die Kupplung 60 in bereits beschriebener Weise geschaltet werden kann. Bei dieser Ausgestaltung muss somit der Motor 57 lediglich die Mischgeschwindigkeit variieren, so dass ein relativ preisgünstiger Motor mit kleinem Regelbereich eingesetzt werden kann.

In Abwandlung der beschriebenen und gezeichneten Ausführungsbeispiele kann die Schalt-Begrenzungseinrichtung kann auch durch externe Quellen realisiert werden, z.B. über den Schlepper 101 durch ein Steuerprogramm (Isobus System) oder eine separate Einheit, über eine Drehzahlmessung oder eine Drehmomentmessung.

## Patentansprüche

1. Verwendung einer Antriebsvorrichtung (9, 29, 39, 49, 59), mit einem Getriebe (8), das eine Eingangswelle (11), eine Ausgangswelle (12), Getriebeglieder zum Antreiben der Ausgangswelle (12) mit einer niedrigen und wenigstens einer höheren Drehzahl, sowie eine Schalteinrichtung (19, 34, 40, 57, 60) zum Schalten zwischen den Drehzahlen aufweist, wobei für einen Anlaufbetrieb eine Anlaufstufe (A) mit niedriger Drehzahl ausgebildet ist, wobei die Anlaufstufe eine Freilaufkupplung (16) enthält, über die ein Getriebeglied (14) in der Anlaufstufe mit der Ein- und Ausgangswelle (11, 12) bewegungsübertragend verbindbar ist und die bei der höheren Drehzahl lösbar ist, für ein Mischwerkzeug (5) eines Futtermischers (1).

2. Verwendung nach Anspruch 1, **dadurch gekennzeichnet, dass** die Freilaufkupplung (16) durch die Drehung der Ausgangswelle (12) lösbar ist.

3. Verwendung nach Anspruch 1 oder 2, **dadurch gekennzeichnet, dass** die Freilaufkupplung (16) eine Klemmkörper-Freilaufkupplung ist.

4. Verwendung nach einem der Ansprüche 1 bis 3, **dadurch gekennzeichnet, dass** die Schalteinrichtung (19, 34, 60) eine hydraulische Kupplung zum Schalten zwischen der Anlaufstufe (A) und der höheren Drehzahl enthält.

5. Verwendung nach einem der Ansprüche 1 bis 4, **dadurch gekennzeichnet, dass** zum Schalten auf die höhere Drehzahl die Eingangswelle (11) über eine Kupplung (19, 60) direkt mit der Ausgangswelle (12) verbindbar ist.

6. Verwendung nach einem der Ansprüche 1 bis 5, **dadurch gekennzeichnet, dass** die Schalteinrichtung (19, 34, 60) eine Schalt-Begrenzungseinrichtung (20) enthält, die ein Schalten auf die höhere Drehzahl vor dem Anlaufbetrieb verhindert.

7. Verwendung nach Anspruch 4 und 6, **dadurch gekennzeichnet, dass** die Schalt-Begrenzungseinrichtung (20) eine Hydraulikmittel-Pumpe (21) und ein Proportionalventil im Schaltkreislauf der hydraulischen Kupplung (19, 34, 40, 60) aufweist, wobei die Pumpe (21) in der Anlaufstufe (A) für einen Druckaufbau im Hydraulikmittel angetrieben ist.

8. Verwendung nach einem der Ansprüche 1 bis 7, **dadurch gekennzeichnet, dass** die Anlaufstufe (A) ein fest mit der Eingangswelle (11) verbundenes erstes Zahnrad (13) aufweist, das mit einem mit der Freilaufkupplung (16) versehenen, auf einer Umgehungswelle (15) sitzenden, zweiten Zahnrad (14) kämmt, und dass die Umgehungswelle (15) bewegungsübertragend mit der Ausgangswelle (12) verbunden ist.

9. Verwendung nach einem der Ansprüche 1 bis 8, **dadurch gekennzeichnet, dass** die Anlaufstufe (A) und eine Getriebestufe (1) für eine höhere Drehzahl vorgesehen ist.

10. Verwendung nach einem der Ansprüche 1 bis 8, **dadurch gekennzeichnet, dass** die Anlaufstufe und wenigstens eine erste und eine zweite Getriebestufe für höhere Drehzahlen vorgesehen ist, durch die die Freilaufkupplung (16) der Anlaufstufe (A) lösbar ist, und wobei jede der ersten und zweiten Getriebestufen über jeweils eine Kupplung (19, 34) mit der Ein- und der Ausgangswelle (11, 12) verbindbare Getriebeglieder aufweist.

11. Verwendung nach Anspruch 10, **dadurch gekennzeichnet, dass** die erste höhere Getriebestufe ein erstes, bewegungsübertragend mit der Eingangswelle (11) verbundenes Zahnrad (13) aufweist, das mit einem auf einer Umgehungswelle (31) sitzenden Zahnrad (30) kämmt, und dass die Umgehungswelle (31) über die Kupplung (34) mit der Ausgangswelle (12) verbindbar ist.

12. Verwendung nach Anspruch 11, **dadurch gekennzeichnet, dass** das Zahnrad (30) über eine weitere Freilaufkupplung (32) bewegungsübertragend mit der Umgehungswelle (31) verbunden ist.

13. Verwendung nach einem der Ansprüche 1 bis 8, **dadurch gekennzeichnet, dass** die Anlaufstufe und ein stufenlos schaltbarer Getriebebereich für höhere Drehzahlen vorgesehen ist, durch den die Freilaufkupplung (16) der Anlaufstufe (A) löbsbar ist, und der ein über eine weitere Freilaufkupplung (44, 54) mit der Ein- und Ausgangswelle (11, 12) verbindbares und in der Anlaufstufe (A) lösbares Getriebeglied (41, 53) aufweist.

14. Verwendung nach Anspruch 13, **dadurch gekennzeichnet, dass** der Getriebebereich einen Kettenwandler (40) umfasst, wobei ein Rad (41) des Kettenwandlers mit der zweiten Freilaufkupplung (44) versehen ist.

15. Verwendung nach Anspruch 13 oder 14, **dadurch gekennzeichnet, dass** das Rad (41) mit der zweiten Freilaufkupplung (44) auf der Ausgangswelle (12) sitzt.

16. Verwendung nach Anspruch 13, **dadurch gekennzeichnet, dass** der Getriebebereich ein Differentialgetriebe (49, 59) umfasst.

17. Verwendung nach Anspruch 16, **dadurch gekennzeichnet, dass** das Differentialgetriebe (49, 59) ein mit der Eingangswelle (11) verbundenes Sonnenrad (51),wenigstens ein Planetenrad (52a, 52b), einen mit der Ausgangswelle (12) über die Freilaufkupplung (54) verbundenen Träger (53) und einen Motor (57) enthält, mit dem die auf die Ausgangswelle (12) übertragene Drehzahl variierbar ist.

18. Verwendung nach Anspruch 17, **dadurch gekennzeichnet, dass** der Motor (57) auf ein Stellrad (55) einwirkt, das mit dem Planetenrad (52a, 52b) kämmt.

19. Verwendung nach Anspruch 18, **dadurch gekennzeichnet, dass** das Planetenrad (52a, 52b) mit einer zur Drehachse des Sonnenrads (51) senkrechten Drehachse im Träger (53) gelagert ist und das Stellrad (55) an einer dem Sonnenrad (51) gegenüberliegenden Seite des Trägers (53) mit dem Planetenrad (52a, 52b) kämmt.

20. Verwendung nach einem der Ansprüche 13 bis 19, **dadurch gekennzeichnet, dass** der Futtermischer als ein von einem Schlepper (101) gezogener Futtermischer ausgebildet ist, wobei eine Hydraulikanlage des Schleppers (10) oder ein Stromaggregat zum Schalten im Getriebebereich vorgesehen ist.

21. Verwendung nach einem der Ansprüche 1 - 20, wobei der Futtermischer (1) eine Mehrzahl von Mischschnecken (5) aufweist, wobei jede Mischschnecke (5) über jeweils ein eigenes Winkelgetriebe (6) von einer gemeinsamen Antriebswelle (7) angetrieben wird, die über ein von der Antriebsvorrichtung bereitgestelltes Reduziergetriebe (8) mit einer Antriebsmaschine (10) verbunden ist.

## Claims

1. Use of a drive device (9, 29, 39, 49, 59) with a gear system (8) comprising an input shaft (11), an output shaft (12), gear members for driving the output shaft (12) with a low and at least one higher speed, as well as a shifting device (19, 34, 40, 57, 60) for shifting between the speeds, and a start-up stage (A) with a low speed is provided for a start-up operation, and the start-up stage contains a freewheel clutch (16) via which a gear member (14) in the start-up stage can be connected to the input and output shaft (11, 12) in a motion transmitting arrangement, and which can be released at the higher speed, for a mixing tool (5) of a feed mixer (1).

2. Use as claimed in claim 1, **characterised in that** the freewheel clutch (16) can be released by rotating the output shaft (12).

3. Use as claimed in claim 1 or 2, **characterised in that** the freewheel clutch (16) is a clamping body freewheel clutch.

4. Use as claimed in one of claims 1 to 3, **characterised in that** the shifting device (19, 34, 60) contains a hydraulic clutch for shifting between the start-up stage (A) and the higher speed.

5. Use as claimed in one of claims 1 to 4, **characterised in that** the input shaft (11) can be connected directly to the output shaft (12) via a clutch (19, 60) in order to shift to the higher speed.

6. Use as claimed in one of claims 1 to 5, **characterised in that** the shifting device (19, 34, 60) contains a shift limitation device (20) which prevents a shift to the higher speed before the start-up operation.

7. Use as claimed in claim 4 and 6, **characterised in that** the shift limitation device (20) comprises a hydraulic fluid pump (21) and a proportional valve in the circuit of the hydraulic clutch (19, 34, 40, 60), and the pump (21) is driven during the start-up stage (A) in order to build up pressure in the hydraulic fluid.

8. Use as claimed in one of claims 1 to 7, **characterised in that** the start-up stage (A) has a first gear (13) fixedly connected to the input shaft (11) which meshes with a second gear (14) provided with the freewheel clutch (16) and seated on a bypass shaft (15), and the bypass shaft (15) is connected to the output shaft (12) in a motion transmitting arrangement.

9. Use as claimed in one of claims 1 to 8, **characterised in that** the start-up stage (A) and a gear stage (1) for a higher speed are provided.

10. Use as claimed in one of claims 1 to 8, **characterised in that** the start-up stage and at least a first and a second gear stage for higher speeds are provided, by means of which the freewheel clutch (16) of the start-up stage (A) can be released, and each of the first and second gear stages has gear members which can be connected respectively via a clutch (19, 34) to the input and output shaft (11, 12).

11. Use as claimed in claim 10, **characterised in that** the first higher gear stage has a first gear (13) connected to the input shaft (11) in a motion-transmitting arrangement which meshes with a gear (30) seated on a bypass shaft (31), and the bypass shaft (31) can be connected to the output shaft (12) via the clutch (34).

12. Use as claimed in claim 11, **characterised in that** the gear (30) is connected via another freewheel clutch (32) to the bypass shaft (31) in a motion-transmitting arrangement.

13. Use as claimed in one of claims 1 to 8, **characterised in that** the start-up stage and an infinitely variable gear range for higher speeds are provided, by means of which the freewheel clutch (16) of the start-up stage (A) can be released, and which has a gear member (41, 53) which can be connected to the input and output shaft (11, 12) via another freewheel clutch (44, 54) and released in the start-up stage (A).

14. Use as claimed in claim 13, **characterised in that** the gear range comprises a chain converter (40), and a wheel (41) of the chain converter is provided with the second freewheel clutch (44).

15. Use as claimed in claim 13 or 14, **characterised in that** the wheel (41) is seated with the second freewheel clutch (44) on the output shaft (12).

16. Use as claimed in claim 13, **characterised in that** the gear range comprises a differential gear (49, 59).

17. Use as claimed in claim 16, **characterised in that** the differential gear (49, 59) contains a sun gear (51) connected to the input shaft (11), at least one planet gear (52a, 52b), a carrier (53) connected via the freewheel clutch (54) to the output shaft (12) and a motor (57), by means of which the speed transmitted to the output shaft (12) can be varied.

18. Use as claimed in claim 17, **characterised in that** the motor (57) acts on an adjusting gear (55) which meshes with the planet gear (52a, 52b).

19. Use as claimed in claim 18, **characterised in that** the planet gear (52a, 52b) is mounted in the carrier (53) with an axis of rotation perpendicular to the axis of rotation of the sun gear (51) and the adjusting gear (55) meshes with the planet gear (52a, 52b) on a side of the carrier (53) lying opposite the sun gear (51).

20. Use as claimed in one of claims 13 to 19, **characterised in that** the feed mixer is designed as a feed mixer drawn by a tractor (101) and a hydraulic system of the tractor (10) or a power unit is provided for shifting in the gear range.

21. Use as claimed in one of claims 1 - 20, whereby the feed mixer (1) has a plurality of mixing screws (5) and each mixing screw (5) is driven respectively via a separate angle transmission (6) by a common drive shaft (7) which is connected to a drive machine (10) via a reducing gear (8) provided by the drive device.

## Revendications

1. Application d'un dispositif d'entraînement (9, 29, 39, 49, 59) avec une transmission (8) qui comporte un arbre d'entrée (11), un arbre de sortie (12), des éléments de transmission pour entraîner l'arbre de sortie (12) à une vitesse de rotation inférieure et à au moins une vitesse de rotation supérieure, ainsi qu'un dispositif de changement de vitesse (19, 34, 40, 57, 60) pour commuter entre les vitesses de rotation, dans laquelle un étage de démarrage (A) à vitesse de rotation réduite est constitué pour un mode de démarrage, dans laquelle l'étage de démarrage comporte un accouplement à roue libre (16) grâce auquel un élément de transmission (14) dans l'étage de démarrage peut être connecté aux arbres d'entrée et de sortie (11, 12) de manière à transmettre le mouvement, et peut être désaccouplé à la vitesse de rotation supérieure, pour un outil de mélange (5) d'un mélangeur d'aliments (1).

2. Application selon la revendication 1, **caractérisée en ce que** l'accouplement à roue libre (16) peut être désaccouplé par rotation de l'arbre de sortie (12).

3. Application selon la revendication 1 ou 2, **caractérisée en ce que** l'accouplement à roue libre (16) est un accouplement à roue libre à corps de serrage.

4. Application selon l'une des revendications 1 à 3, **caractérisée en ce que** le dispositif de changement de vitesse (19, 34, 60) comporte un accouplement hydraulique pour commuter entre l'étage de démarrage (A) et la vitesse de rotation supérieure.

5. Application selon l'une des revendications 1 à 4, **caractérisée en ce que** l'arbre d'entrée (11) peut être connecté directement à l'arbre de sortie (12) via un accouplement (19, 60) pour commuter à la vitesse de rotation supérieure.

6. Application selon l'une des revendications 1 à 5, **caractérisée en ce que** le dispositif de changement de vitesse (19, 34, 60) comporte un dispositif de limitation de commutation (20) qui empêche un changement à la vitesse de rotation supérieure avant le mode de démarrage.

7. Application selon les revendications 4 et 6, **caractérisée en ce que** le dispositif de limitation de commutation (20) comporte une pompe à fluide hydraulique (21) et une vanne proportionnelle dans le circuit de commutation de l'accouplement hydraulique (19, 34, 40, 60), dans laquelle la pompe (21) est entraînée dans l'étage de démarrage (A) pour mettre le fluide hydraulique sous pression.

8. Application selon l'une des revendications 1 à 7, **caractérisée en ce que** l'étage de démarrage (A) comporte un premier engrenage (13) connecté de manière fixe à l'arbre d'entrée (11), qui est engrené avec un deuxième engrenage (14) pourvu avec l'accouplement à roue libre (16) sur un arbre de dérivation (15), et **en ce que** l'arbre de dérivation (15) est connecté à l'arbre de sortie (12) de manière à transmettre le mouvement.

9. Application selon l'une des revendications 1 à 8, **caractérisée en ce que** l'étage de démarrage (A) et un étage de transmission (1) sont pourvus pour une vitesse de rotation supérieure.

10. Application selon l'une des revendications 1 à 8, **caractérisée en ce que** l'étage de démarrage et au moins un premier étage de transmission et un deuxième étage de transmission sont pourvus pour des vitesses de rotation supérieures grâce auxquelles l'accouplement à roue libre (16) de l'étage de démarrage (A) peut être désaccouplé, et dans laquelle chacun des premier et deuxième étages de transmission via un accouplement respectif (19, 34) avec les arbres d'entrée et de sortie (11, 12) comporte des éléments de transmission connectables.

11. Application selon la revendication 10, **caractérisée en ce que** le premier étage de transmission supérieur comporte un premier engrenage (13) connecté à l'arbre d'entrée (11) de manière à transmettre le mouvement, qui s'engrène avec un engrenage (30) agencé sur un arbre de dérivation (31), et **en ce que** l'arbre de dérivation (31) peut être connecté à l'arbre de sortie (12) via l'accouplement (34).

12. Application selon la revendication 11, **caractérisée en ce que** l'engrenage (30) est connecté à l'arbre de dérivation (31) via un accouplement à roue libre additionnel (32) de manière à transmettre le mouvement.

13. Application selon l'une des revendications 1 à 8, **caractérisée en ce que** l'étage de démarrage et une section de transmission commutable en continu sont pourvus pour des vitesses de rotation supérieures, moyennant quoi l'accouplement à roue libre (16) de l'étage de démarrage (A) peut être désaccouplé, et comportant un élément de transmission (41, 53) qui peut être connecté via un accouplement à roue libre additionnel (44, 54) aux arbres d'entrée et de sortie (11, 12) et désaccouplé dans l'étage de démarrage (A).

14. Application selon la revendication 13, **caractérisée en ce que** la section de transmission comporte un variateur de vitesse à chaîne (40), dans laquelle une roue (41) du variateur de vitesse à chaîne est pourvue du deuxième accouplement à roue libre (44).

15. Application selon la revendication 13 ou 14, **caractérisée en ce que** la roue (41) comportant le deuxième accouplement à roue libre (44) est agencée sur l'arbre de sortie (12).

16. Application selon la revendication 13, **caractérisée en ce que** la section de transmission comporte un différentiel mécanique (49, 59).

17. Application selon la revendication 16, **caractérisée en ce que** le différentiel (49, 59) comporte un pignon solaire (51) connecté à l'arbre d'entrée (11), au moins un pignon planétaire (52a, 52b), un support (53) connecté à l'arbre de sortie (12) via l'accouplement à roue libre (54) et un moteur (57), grâce auquel la vitesse de rotation transmise à l'arbre de sortie (12) peut être variée.

18. Application selon la revendication 17, **caractérisée en ce que** le moteur (57) agit sur un pignon de réglage (55) qui est engrené avec le pignon planétaire (52a, 52b).

19. Application selon la revendication 18, **caractérisée en ce que** le pignon planétaire (52a, 52b) est supporté dans le support (53) sur un axe de rotation perpendiculaire à l'axe de rotation du pignon solaire (51) et **en ce que** le pignon de réglage (55) s'engrène avec le pignon planétaire (52a, 52b) sur un côté du support (53) opposé au pignon solaire (51).

20. Application selon l'une des revendications 13 à 19, **caractérisée en ce que** le mélangeur d'aliments est constitué comme un mélangeur d'aliments remorqué par un tracteur (101), dans laquelle un système hydraulique du tracteur (10) ou un groupe électrogène est pourvu pour commuter dans la section de transmission.

21. Application selon l'une des revendications 1 à 20, dans laquelle le mélangeur d'aliments (1) comporte une pluralité de vis de mélange (5), dans laquelle chaque vis de mélange (5) est entraînée par un couple conique propre respectif (6) d'un arbre d'entraînement commun (7), qui est connecté à une machine d'entraînement (10) via un réducteur (8) procuré par le dispositif d'entraînement.
